# EUROPEAN PATENT APPLICATION

(11) **EP 3 260 666 A1**
(43) Date of publication of application: **27.12.2017**
(21) Application number: 16461528.8
(22) Date of filing: 23.06.2016
(51) Int. Cl.: F01D 25/16, B23K 31/00

(54) **EXHAUST FRAME OF A GAS TURBINE ENGINE**

(71) Applicant: General Electric Company, Schenectady, NY 12345 (US)
(72) Inventor: DYNAK, Krzysztof, 02-256 Warszawa (PL); JAKUBCZAK, Przemyslaw Michal, 02-256 Warszawa (PL)
(74) Representative: Lee, Brenda

(57) **Abstract**

The present application provides an exhaust frame (100) for a gas turbine engine. The exhaust frame may include an inner casing (110) extending along a longitudinal axis of the exhaust frame, an outer casing (112) positioned radially outward from the inner casing, a strut (114) extending radially from the inner casing to the outer casing, and a relief groove (134, 136) defined in the inner casing or the outer casing and positioned about the strut. The present application further provides a method for distributing stress concentrations in an exhaust frame of a gas turbine engine.

## Description

### TECHNICAL FIELD

The present application and the resultant patent relate generally to gas turbine engines and more particularly relate to an exhaust frame for containing and directing combustion gases along a hot gas path of a gas turbine engine.

### BACKGROUND OF THE INVENTION

In a gas turbine engine, hot combustion gases generated in one or more combustors generally may flow along a hot gas path extending through a turbine and an exhaust frame positioned downstream of the turbine. The exhaust frame may include an inner casing, an outer casing, and a number of struts extending between the inner casing and the outer casing. The inner casing may house a shaft bearing that supports a main shaft of the gas turbine engine therein. The combustion gases flowing through the exhaust frame may be contained between the inner casing and the outer casing and may flow over the struts. In this manner, the inner casing, the outer casing, and the struts may be subjected to high temperatures resulting from the flow of combustion gases along the hot gas path, which may result in the generation of high thermal stresses in these components and the interfaces there between. Because the efficiency of a gas turbine engine is dependent on its operating temperatures, there is an ongoing demand for components positioned along and within the hot gas path, such as the inner casing, the outer casing, and the struts of the exhaust frame, to be capable of withstanding increasingly higher temperatures without deterioration, failure, or decrease in useful life.

According to certain exhaust frame configurations, each strut may be welded at one end to the inner casing and at another end to the outer casing. During operation of the gas turbine engine, high stresses may be generated in the struts, particularly in the welded regions adjacent the inner casing and the outer casing, due to large temperature gradients produced in the exhaust frame. For example, during startup of the gas turbine engine, high stresses may be generated as the struts heat up faster than the inner casing and the outer casing. In a similar manner, high stresses may be generated during shut down of the gas turbine engine, as the struts cool down faster than the inner casing and the outer casing. During steady state operation of the gas turbine engine, high stresses may be generated due to cooling of the inner casing and/or the outer casing, such as via a cooling air system or external air, while the struts experience higher temperatures within the hot gas path. Additionally, when the inner casing is used to support the shaft bearing, high stresses may be generated in the struts due to imbalance of the main shaft, as may result from a "blade out" event or other causes. Ultimately, stress concentrations in the struts may lead to failure of the welds, which generally may have lower fatigue resistance than the base material (i.e., the inner casing or the outer casing) being welded.

There is thus a desire for an improved exhaust frame for containing and directing combustion gases along a hot gas path of a gas turbine engine at high operating temperatures. Such an improved exhaust frame should reduce stress concentrations in the struts thereof, particularly in the welded regions of the struts adjacent the inner casing and the outer casing of the exhaust frame. In this manner, such an improved exhaust frame should reduce the risk of failure of the welds, thereby increasing the life of the struts and the overall exhaust frame.

### SUMMARY OF THE INVENTION

The present application and the resultant patent thus provide an exhaust frame for a gas turbine engine. The exhaust frame may include an inner casing extending along a longitudinal axis of the exhaust frame, an outer casing positioned radially outward from the inner casing, a strut extending radially from the inner casing to the outer casing, and a relief groove defined in the inner casing or the outer casing and positioned about a perimeter of the strut.

The present application and the resultant patent further provide a method for distributing stress concentrations in an exhaust frame of a gas turbine engine. The method may include the step of providing an exhaust frame including an inner casing extending along a longitudinal axis of the exhaust frame, an outer casing positioned radially outward from the inner casing, a strut extending radially from the inner casing to the outer casing, and a relief groove defined in the inner casing or the outer casing and positioned about a perimeter of the strut. The method also may include the step of directing a flow of combustion gases through the exhaust frame, wherein stresses generated in the relief groove are higher than stresses generated in the strut.

The present application and the resultant patent further provide a gas turbine engine. The gas turbine engine may include a compressor, a combustor in communication with the compressor, a turbine in communication with the combustor, and an exhaust frame in communication with the turbine. The exhaust frame may include an inner casing extending along a longitudinal axis of the exhaust frame, an outer casing positioned radially outward from the inner casing, a strut extending radially from the inner casing to the outer casing, and a relief groove defined in the inner casing or the outer casing and positioned about a perimeter of the strut.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

FIG. 1 is a schematic diagram of a gas turbine engine including a compressor, a combustor, a turbine, an exhaust frame, and an external load.
FIG. 2 is an end view of an embodiment of an exhaust frame as may be described herein and as may be used in the gas turbine engine of FIG. 1, the exhaust frame including an inner casing, an outer casing, and a number of struts.
FIG. 3 is a cross-sectional view of the exhaust frame of FIG. 2, taken along line 3-3, showing the inner casing, the outer casing, and two of the struts.
FIG. 4A is a detailed cross-sectional view of portions of the exhaust frame of FIG. 2, taken along line 4-4, showing an embodiment of an interface between the inner casing and one of the struts.
FIG. 4B is a detailed cross-sectional view of portions of the exhaust frame of FIG. 2, taken along line 4-4, showing an embodiment of an interface between the inner casing and one of the struts.
FIG. 4C is a detailed cross-sectional view of portions of the exhaust frame of FIG. 2, taken along line 4-4, showing an embodiment of an interface between the inner casing and one of the struts.
FIG. 4D is a detailed cross-sectional view of portions of the exhaust frame of FIG. 2, taken along line 4-4, showing an embodiment of an interface between the inner casing and one of the struts.
FIG. 5A is a detailed cross-sectional view of the portions of the exhaust frame of FIG. 4A, taken along line 5A-5A, showing the interface between the inner casing and the strut.
FIG. 5B is a detailed cross-sectional view of the portions of the exhaust frame of FIG. 4B, taken along line 5B-5B, showing the interface between the inner casing and the strut.
FIG. 5C is a detailed cross-sectional view of the portions of the exhaust frame of FIG. 4E, taken along line 5C-5C, showing the interface between the inner casing and the strut.
FIG. 6A is a detailed cross-sectional view of portions of the exhaust frame of FIG. 2, taken along line 6-6, showing an embodiment of an interface between the outer casing and one of the struts.
FIG. 6B is a detailed cross-sectional view of portions of the exhaust frame of FIG. 2, taken along line 6-6, showing an embodiment of an interface between the outer casing and one of the struts.
FIG. 6C is a detailed cross-sectional view of portions of the exhaust frame of FIG. 2, taken along line 6-6, showing an embodiment of an interface between the outer casing and one of the struts.
FIG. 6D is a detailed cross-sectional view of portions of the exhaust frame of FIG. 2, taken along line 6-6, showing an embodiment of an interface between the outer casing and one of the struts.
FIG. 7A is a detailed cross-sectional view of the portions of the exhaust frame of FIG. 6A, taken along line 7A-7A, showing the interface between the outer casing and the strut.
FIG. 7B is a detailed cross-sectional view of the portions of the exhaust frame of FIG. 6B, taken along line 7B-7B, showing the interface between the outer casing and the strut.
FIG. 7C is a detailed cross-sectional view of the portions of the exhaust frame of FIG. 6E, taken along line 7C-7C, showing the interface between the outer casing and the strut.

### DETAILED DESCRIPTION

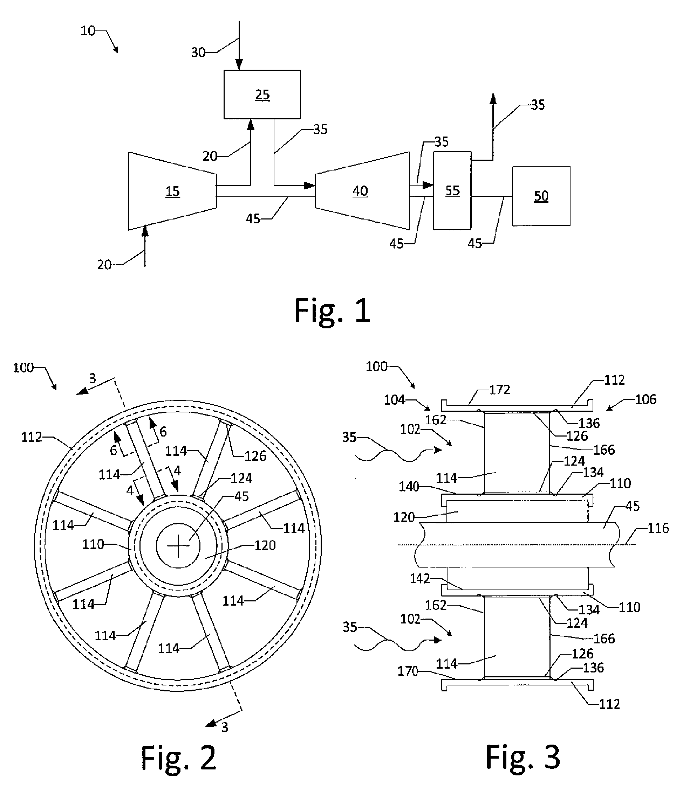

Referring now to the drawings, in which like numerals refer to like elements throughout the several views, FIG. 1 shows a schematic diagram of a gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 and an external load 50, such as an electrical generator and the like, via a shaft 45. The flow of combustion gases 35 is delivered from the turbine 40 to an exhaust frame 55 positioned downstream thereof. The exhaust frame 55 may contain and direct the flow of combustion gases 35 to other components of the gas turbine engine 10. For example, the exhaust frame 55 may direct the flow of combustion gases 35 to an exhaust plenum or an exhaust diffuser. Other configurations and other components may be used herein.

The gas turbine engine 10 may use natural gas, various types of syngas, and/or other types of fuels. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

FIGS. 2 and 3 show an embodiment of an exhaust frame 100 as may be described herein. The exhaust frame 100 may be used in the gas turbine engine 10 and generally may be configured and arranged in a manner similar to the exhaust frame 55 described above. In particular, the exhaust frame 100 may be positioned downstream of the turbine 40 and may be configured to receive the flow of combustion gases 35 flowing along a hot gas path 102 of the gas turbine engine 10. The hot gas path 102 may extend through the turbine 40 and the exhaust frame 100, as described below. The exhaust frame 100 may have a leading or upstream end 104 and a trailing or downstream end 106, as shown. The exhaust frame 100 may be configured to contain and direct the flow of combustion gases 35 to other components of the gas turbine engine 10, such as an exhaust plenum or an exhaust diffuser positioned downstream of the exhaust frame 100.

As shown, the exhaust frame 100 may include an inner casing 110, an outer casing 112, and a number of struts 114 extending between the inner casing 110 and the outer casing 112. The inner casing 110 may be formed as a tube shaped body extending axially along and coaxial with a longitudinal axis 116 of the exhaust frame 100. The inner casing 110 may house a shaft bearing 120 that supports the shaft 45 of the gas turbine engine 10 for rotation therein. The outer casing 112 may be formed as a tube shaped body extending along and coaxial with the longitudinal axis 116 of the exhaust frame 100. As shown, the outer casing 112 may be spaced apart from and positioned radially outward from the inner casing 110. In this manner, the inner casing 110 and the outer casing 112 may define a portion of the hot gas path 102 there between (i.e., the annular space between the inner casing 110 and the outer casing 112). In some embodiments, as described below with respect to FIGS. 8A-8C, the exhaust frame 100 also may include a liner and/or insulation disposed along the inner casing 110, the outer casing 112, and/or the struts 114. In such embodiments, the liner may define a portion of the hot gas path 102 extending through the exhaust frame 100.

During operation of the gas turbine engine 10, the combustion gases 35 flowing along the hot gas path 102 may be contained between the inner casing 110 and the outer casing 112 and may flow over the struts 114. The inner casing 110 may be formed as a single component or may include a number of segments joined together to form the inner casing 110. Similarly, the outer casing 112 may be formed as a single component or may include a number of segments joined together to form the outer casing 112. Although the inner casing 110 and the outer casing 112 are shown as having circular cross-sectional shapes, other shapes may be used in other configurations.

The struts 114 may extend radially from the inner casing 110 to the outer casing 112 with respect to the longitudinal axis 116 of the exhaust frame 100. As shown, the struts 114 may be arranged in a circumferential array about the longitudinal axis 116. Although eight struts 114 are shown in FIG. 2, the exhaust frame 100 may include any number of struts 114 extending between the inner casing 110 and the outer casing 112. Each strut 114 may be attached at a radially inner end thereof to the inner casing 110 and may be attached at a radially outer end thereof to the outer casing 112. In particular, each strut 114 may be welded at the radially inner end thereof to the inner casing 110 via a first weld 124 and may be welded at the radially outer end thereof to the outer casing 112 via a second weld 126. The first weld 124 and the second weld 126 each may be a continuous weld extending around a perimeter of the strut 114 along the respective casing 110, 112, as shown. Alternatively, the first weld 124 and/or the second weld 126 may be an intermittent weld extending around the perimeter of the strut 114 along the respective casing 110, 112. In some embodiments, the first weld 124 and the second weld 126 each may be a fillet weld, although other types of welds may be used in other embodiments.

The inner casing 110 and/or the outer casing 112 may include a number of relief grooves defined therein and configured to reduce stress concentrations in the struts 114 during operation of the gas turbine engine 10. In particular, as shown in FIG. 3, the inner casing 110 may include a first relief groove 134 positioned about each of the struts 114. In a similar manner, the outer casing 112 may include a second relief groove 136 positioned about each of the struts 114. Although both the first relief grooves 134 and the second relief grooves 136 are shown in FIG. 3, it will be appreciated that, in some embodiments, the exhaust frame 100 may include only the first relief grooves 134 (while the second relief grooves 136 are omitted), and in other embodiments, the exhaust frame 100 may include only the second relief grooves 136 (while the first relief grooves 134 are omitted).

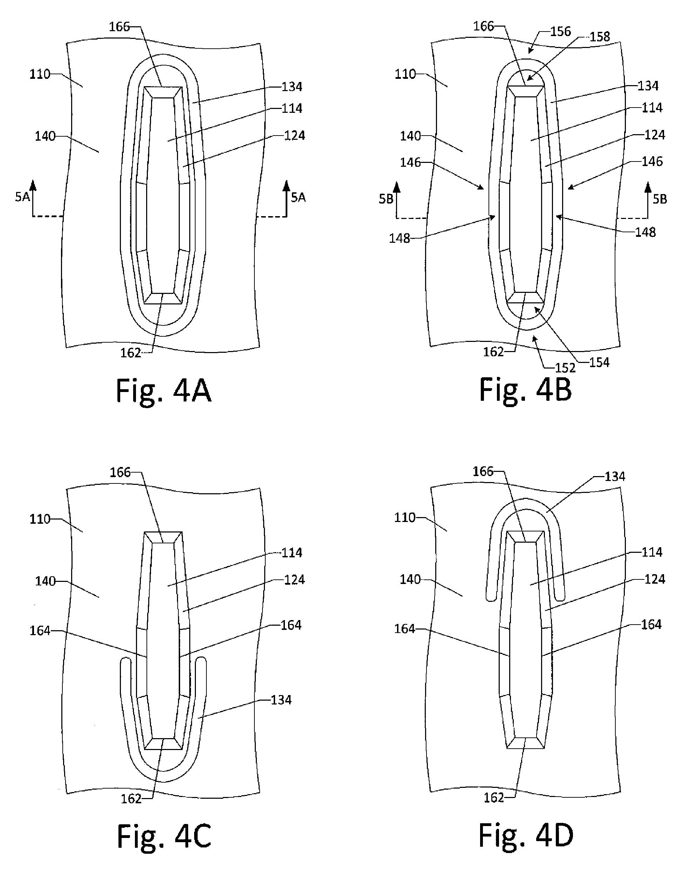

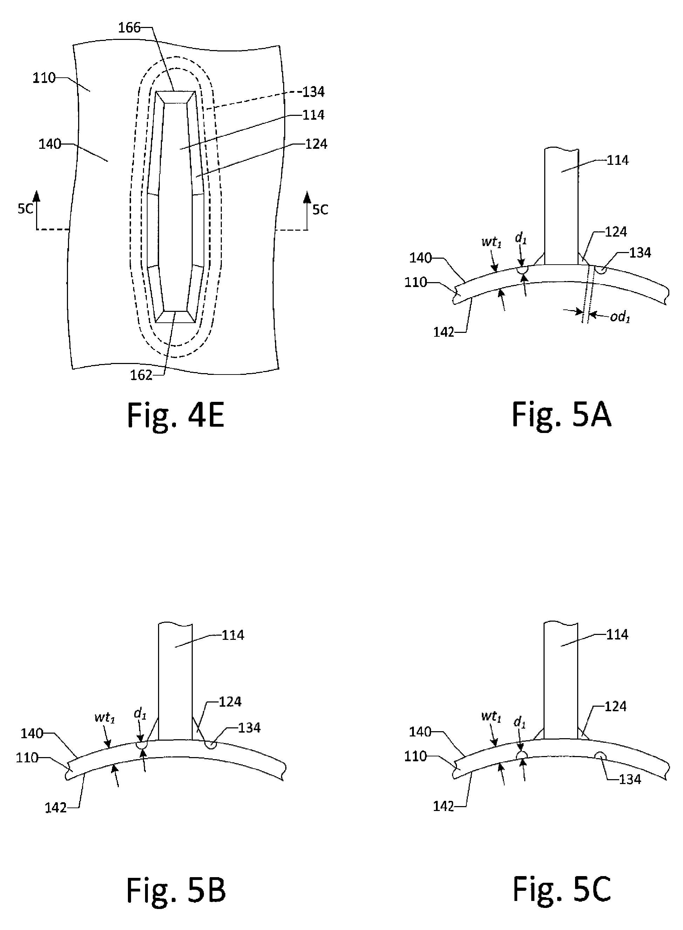

FIGS. 4A and 5A are detailed cross-sectional views showing an embodiment of an interface between the inner casing 110 and one of the struts 114. The radially inner end of the strut 114 may be attached to a radially outer surface 140 of the inner casing 110 via the first weld 124, which may encircle the perimeter of the strut 114. As shown, the first relief groove 134 may be defined in the radially outer surface 140 of the inner casing 110. The first relief groove 134 may have a depth *d₁* that is less than a wall thickness *wt1* of the inner casing 110. In other words, the first relief groove 134 does not extend through the inner casing 110 to the radially inner surface 142 thereof. In some embodiments, the depth *d₁* may be constant along the path of the first relief groove 134. In other embodiments, the depth *d₁* may vary along the path of the first relief groove 134. In such embodiments, a maximum value of the depth *d₁* along the path of the first relief groove 134 may be less than the wall thickness *wt1* of the inner casing 110, such that the first relief groove 134 does not extend through the inner casing 110 to the radially inner surface 142 thereof.

As shown, the first relief groove 134 may extend along the entire perimeter of the strut 114, thereby forming a complete loop around the strut 114. The path of the first relief groove 134 generally may be contoured to correspond to the shape of the perimeter of the strut 114. As shown, the first relief groove 134 may be spaced apart from the first weld 124. In other words, a portion of the radially outer surface 140 of the inner casing 110 may be disposed between the first relief groove 134 and the first weld 124 along the entire path of the first relief groove 134. In particular, the first relief groove 134 may be spaced apart from the first weld 124 by an offset distance *od₁* along the path of the first relief groove 134. In some embodiments, the offset distance *od₁* may be constant along the path of the first relief groove 134. In other embodiments, the offset distance *od₁* may vary along the path of the first relief groove 134. In such embodiments, a minimum value of the offset distance *od₁* along the path of the first relief groove 134 may be greater than zero, such that a portion of the radially outer surface 140 of the inner casing 110 is disposed between the first relief groove 134 and the first weld 124 along the entire path of the first relief groove 134.

In some embodiments, the first relief groove 134 may have a semi-circular cross-sectional shape, as shown. In other embodiments, the first relief groove 134 may have a semi-elliptical, semi-ovular, rectangular, square, or other polygonal or partial polygonal cross-sectional shape. In some embodiments, the cross-sectional shape of the first relief groove 134 may be constant along the path of the first relief groove 134. In other embodiments, the cross-sectional shape of the first relief groove 134 may vary along the path of the first relief groove 134.

FIGS. 4B and 5B are detailed cross-sectional views showing another embodiment of an interface between the inner casing 110 and one of the struts 114. The first relief groove 134 may be defined in the radially outer surface 140 of the inner casing 110 and may extend along the entire perimeter of the strut 114, thereby forming a complete loop around the strut 114. The path of the first relief groove 134 generally may be contoured to correspond to the shape of the perimeter of the strut 114. As shown, at least a portion of the first relief groove 134 may be positioned adjacent (i.e., not spaced apart from) the first weld 124, thereby forming a smooth transition from the first weld 124 to the first relief groove 134. For example, lateral portions 146 of the first relief groove 134 may be positioned adjacent lateral portions 148 of the first weld 124, as shown. In some embodiments, a leading end portion 152 of the first relief groove 134 may be spaced apart from a leading end portion 154 of the first weld 124, and a trailing end portion 156 of the first relief groove 134 may be spaced apart from a trailing end portion 158 of the first weld 124, as shown. In other embodiments, the first relief groove 134 may be positioned adjacent the first weld 124 along the entire path of the first relief groove 134. Additional features of the first relief groove 134 shown may be similar to those described above.

FIG. 4C is a detailed cross-sectional view showing another embodiment of an interface between the inner casing 110 and one of the struts 114. The first relief groove 134 may be defined in the radially outer surface 140 of the inner casing 110. As shown, the first relief groove 134 may extend along only a portion of the perimeter of the strut 114. In particular, the first relief groove 134 may extend along a leading end 162 of the strut 114 and partially along lateral sides 164 of the strut 114, as shown. The first relief groove 134 may have a generally U-shaped path, although other shapes of the path of the first relief groove 134 may be used. In some embodiments, the first relief groove 134 may be spaced apart from the first weld 124 along the entire path of the first relief groove 134. In other embodiments, at least a portion of the first relief groove 134 may be positioned adjacent the first weld 124. Additional features of the first relief groove 134 shown may be similar to those described above.

FIG. 4D is a detailed cross-sectional view showing another embodiment of an interface between the inner casing 110 and one of the struts 114. The first relief groove 134 may be defined in the radially outer surface 140 of the inner casing 110. As shown, the first relief groove 134 may extend along only a portion of the perimeter of the strut 114. In particular, the first relief groove 134 may extend along a trailing end 166 of the strut 114 and partially along the lateral sides 164 of the strut 114, as shown. The first relief groove 134 may have a generally U-shaped path, although other shapes of the path of the first relief groove 134 may be used. In some embodiments, the first relief groove 134 may be spaced apart from the first weld 124 along the entire path of the first relief groove 134. In other embodiments, at least a portion of the first relief groove 134 may be positioned adjacent the first weld 124. Additional features of the first relief groove 134 shown may be similar to those described above.

FIGS. 4E and 5C are detailed cross-sectional views showing another embodiment of an interface between the inner casing 110 and one of the struts 114. The first relief groove 134 may be defined in the radially inner surface 142 of the inner casing 110. The depth *dₗ* of the first relief groove 134 may be less than the wall thickness *wt1* of the inner casing 110. In other words, the first relief groove 134 does not extend through the inner casing 110 to the radially outer surface 140 thereof. As shown, the first relief groove 134 may extend along a radial projection of the entire perimeter of the strut 114, thereby forming a complete loop around the projection of the strut 114. The path of the first relief groove 134 generally may be contoured to correspond to the shape of the perimeter of the strut 114. Additional features of the first relief groove 134 shown may be similar to those described above.

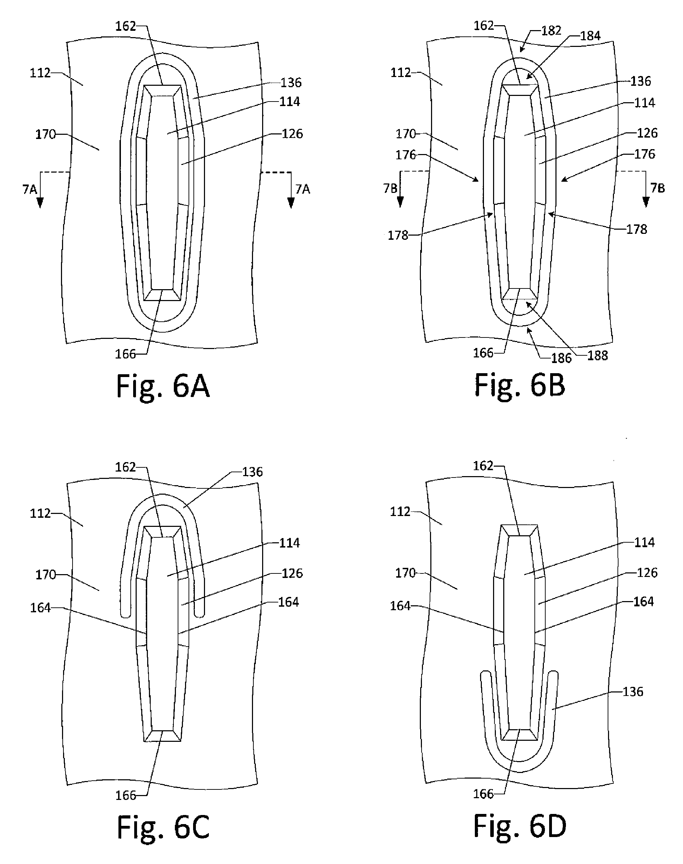

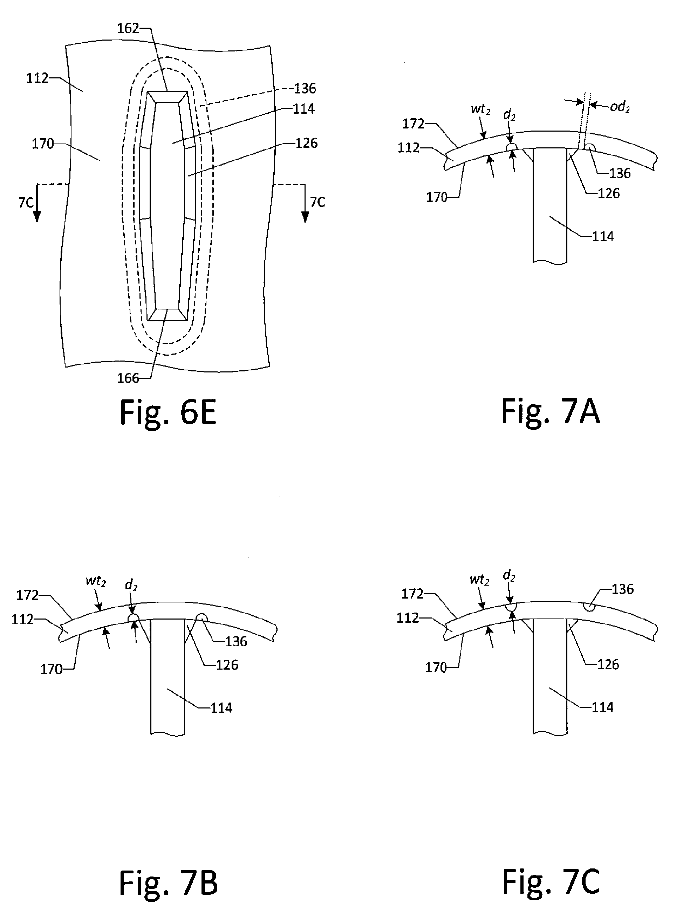

FIGS. 6A and 7A are detailed cross-sectional views showing an embodiment of an interface between the outer casing 112 and one of the struts 114. The radially outer end of the strut 114 may be attached to a radially inner surface 170 of the outer casing 112 via the second weld 126, which may encircle the perimeter of the strut 114. As shown, the second relief groove 136 may be defined in the radially inner surface 170 of the outer casing 112. The second relief groove 136 may have a depth *d₂* that is less than a wall thickness *wt2* of the outer casing 112. In other words, the second relief groove 136 does not extend through the outer casing 112 to the radially outer surface 172 thereof. In some embodiments, the depth *d₂* may be constant along the path of the second relief groove 136. In other embodiments, the depth *d₂* may vary along the path of the second relief groove 136. In such embodiments, a maximum value of the depth *d₂* along the path of the second relief groove 136 may be less than the wall thickness *wt2* of the outer casing 112, such that the second relief groove 136 does not extend through the outer casing 112 to the radially outer surface 172 thereof.

As shown, the second relief groove 136 may extend along the entire perimeter of the strut 114, thereby forming a complete loop around the strut 114. The path of the second relief groove 136 generally may be contoured to correspond to the shape of the perimeter of the strut 114. As shown, the second relief groove 136 may be spaced apart from the second weld 126. In other words, a portion of the radially inner surface 170 of the outer casing 112 may be disposed between the second relief groove 136 and the second weld 126 along the entire path of the second relief groove 136. In particular, the second relief groove 136 may be spaced apart from the second weld 126 by an offset distance *od₂* along the path of the second relief groove 136. In some embodiments, the offset distance *od₂* may be constant along the path of the second relief groove 136. In other embodiments, the offset distance *od₂* may vary along the path of the second relief groove 136. In such embodiments, a minimum value of the offset distance *od₂* along the path of the second relief groove 136 may be greater than zero, such that a portion of the radially inner surface 170 of the outer casing 112 is disposed between the second relief groove 136 and the second weld 126 along the entire path of the second relief groove 136.

In some embodiments, the second relief groove 136 may have a semicircular cross-sectional shape, as shown. In other embodiments, the second relief groove 136 may have a semi-elliptical, semi-ovular, rectangular, square, or other polygonal or partial polygonal cross-sectional shape. In some embodiments, the cross-sectional shape of the second relief groove 136 may be constant along the path of the second relief groove 136. In other embodiments, the cross-sectional shape of the second relief groove 136 may vary along the path of the second relief groove 136.

FIGS. 6B and 7B are detailed cross-sectional views showing another embodiment of an interface between the outer casing 112 and one of the struts 114. The second relief groove 136 may be defined in the radially inner surface 170 of the outer casing 112 and may extend along the entire perimeter of the strut 114, thereby forming a complete loop around the strut 114. The path of the second relief groove 136 generally may be contoured to correspond to the shape of the perimeter of the strut 114. As shown, at least a portion of the second relief groove 136 may be positioned adjacent (i.e., not spaced apart from) the second weld 126, thereby forming a smooth transition from the second weld 126 to the second relief groove 136. For example, lateral portions 176 of the second relief groove 136 may be positioned adjacent lateral portions 178 of the second weld 126, as shown. In some embodiments, a leading end portion 182 of the second relief groove 136 may be spaced apart from a leading end portion 184 of the second weld 126, and a trailing end portion 186 of the second relief groove 136 may be spaced apart from a trailing end portion 188 of the second weld 126, as shown. In other embodiments, the second relief groove 136 may be positioned adjacent the second weld 126 along the entire path of the second relief groove 136. Additional features of the second relief groove 136 shown may be similar to those described above.

FIG. 6C is a detailed cross-sectional view showing another embodiment of an interface between the outer casing 112 and one of the struts 114. The second relief groove 136 may be defined in the radially inner surface 170 of the outer casing 112. As shown, the second relief groove 136 may extend along only a portion of the perimeter of the strut 114. In particular, the second relief groove 136 may extend along the leading end 162 of the strut 114 and partially along the lateral sides 164 of the strut 114, as shown. The second relief groove 136 may have a generally U-shaped path, although other shapes of the path of the second relief groove 136 may be used. In some embodiments, the second relief groove 136 may be spaced apart from the second weld 126 along the entire path of the second relief groove 136. In other embodiments, at least a portion of the second relief groove 136 may be positioned adjacent the second weld 126. Additional features of the second relief groove 136 shown may be similar to those described above.

FIG. 6D is a detailed cross-sectional view showing another embodiment of an interface between the outer casing 112 and one of the struts 114. The second relief groove 136 may be defined in the radially inner surface 170 of the outer casing 112. As shown, the second relief groove 136 may extend along only a portion of the perimeter of the strut 114. In particular, the second relief groove 136 may extend along the trailing end 166 of the strut 114 and partially along the lateral sides 164 of the strut 114, as shown. The second relief groove 136 may have a generally U-shaped path, although other shapes of the path of the second relief groove 136 may be used. In some embodiments, the second relief groove 136 may be spaced apart from the second weld 126 along the entire path of the second relief groove 136. In other embodiments, at least a portion of the second relief groove 136 may be positioned adjacent the second weld 126. Additional features of the second relief groove 136 shown may be similar to those described above.

FIGS. 6E and 7C are detailed cross-sectional views showing another embodiment of an interface between the outer casing 112 and one of the struts 114. The second relief groove 136 may be defined in the radially outer surface 172 of the outer casing 112. The depth *d₂* of the second relief groove 136 may be less than the wall thickness *wt2* of the outer casing 112. In other words, the second relief groove 136 does not extend through the outer casing 112 to the radially inner surface 170 thereof. As shown, the second relief groove 136 may extend along a radial projection of the entire perimeter of the strut 114, thereby forming a complete loop around the projection of the strut 114. The path of the second relief groove 136 generally may be contoured to correspond to the shape of the perimeter of the strut 114. Additional features of the second relief groove 136 shown may be similar to those described above.

During operation of the gas turbine engine 10, the first relief grooves 134 of the inner casing 110 and/or the second relief grooves 136 of the outer casing 112 may reduce stress concentrations in the struts 114. In particular, the first relief grooves 134 and/or the second relief grooves 136 may locally reduce the stiffness of the respective casing 110, 112, such that the highest stresses generated in the exhaust frame 100 are in the first relief grooves 134 and/or the second relief grooves 136 instead of the struts 114 or the welds 124, 126.

The embodiments described herein thus provide an improved exhaust frame for containing and directing combustion gases along a hot gas path of a gas turbine engine at high operating temperatures. As described above, the exhaust frame may include relief grooves defined in the inner casing and/or the outer casing and positioned about each of the struts. The relief grooves may reduce stress concentrations in the struts by locally reducing the stiffness of the respective casing, such that the highest stresses generated in the exhaust frame are in the relief grooves instead of the struts or the welds. In this manner, the relief grooves may reduce the risk of failure at the welds, thereby increasing the life of the struts and the overall exhaust frame. The exhaust frame also may include one or more liners that protect the inner casing, the outer casing, and/or the struts from direct exposure to the combustion gases, and one or more layers of insulation that insulate the inner casing, the outer casing, and/or the struts from the high temperatures resulting from the combustion gases.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. An exhaust frame for a gas turbine engine, the exhaust frame comprising: an inner casing extending along a longitudinal axis of the exhaust frame; an outer casing positioned radially outward from the inner casing; a strut extending radially from the inner casing to the outer casing; and a relief groove defined in the inner casing or the outer casing and positioned about the strut.

2. The exhaust frame of claim 1, wherein the relief groove is defined in the inner casing, and wherein a depth of the relief groove is less than a wall thickness of the inner casing.

3. The exhaust frame of claim 2, wherein the relief groove is defined in a radially outer surface of the inner casing.

4. The exhaust frame of claim 2, wherein the relief groove is defined in a radially inner surface of the inner casing.

5. The exhaust frame of claim 2, wherein the strut is attached to the inner casing via a weld.

6. The exhaust frame of claim 5, wherein the relief groove is spaced apart from the weld.

7. The exhaust frame of claim 5, wherein at least a portion of the relief groove is positioned adjacent to the weld.

8. The exhaust frame of claim 5, wherein the weld comprises a continuous weld extending around an entire perimeter of the strut.

9. The exhaust frame of claim 1, wherein the relief groove is defined in the outer casing, and wherein a depth of the relief groove is less than a wall thickness of the outer casing.

10. The exhaust frame of claim 9, wherein the relief groove is defined in a radially inner surface of the outer casing.

11. The exhaust frame of claim 9, wherein the relief groove is defined in a radially outer surface of the outer casing.

12. The exhaust frame of claim 1, wherein the relief groove extends along an entire perimeter of the strut.

13. The exhaust frame of claim 1, wherein the relief groove extends along only a portion of a perimeter of the strut.

14. The exhaust frame of claim 1, wherein the relief groove comprises a semi-circular cross-sectional shape.

15. A method for distributing stress concentrations in an exhaust frame of a gas turbine engine, the method comprising: providing an exhaust frame comprising: an inner casing extending along a longitudinal axis of the exhaust frame; an outer casing positioned radially outward from the inner casing; a strut extending radially from the inner casing to the outer casing; and a relief groove defined in the inner casing or the outer casing and positioned about the strut; and directing a flow of combustion gases through the exhaust frame, wherein stresses generated in the relief groove are higher than stresses generated in the strut.

16. A gas turbine engine, comprising: a compressor; a combustor in communication with the compressor; a turbine in communication with the combustor; and an exhaust frame in communication with the turbine, the exhaust frame comprising: an inner casing extending along a longitudinal axis of the exhaust frame; an outer casing positioned radially outward from the inner casing; a strut extending radially from the inner casing to the outer casing; and a relief groove defined in the inner casing or the outer casing and positioned about the strut.

17. The gas turbine engine of claim 16, wherein the relief groove is defined in the inner casing, and wherein a depth of the relief groove is less than a wall thickness of the inner casing.

18. The gas turbine engine of claim 16, wherein the relief groove is defined in the outer casing, and wherein a depth of the relief groove is less than a wall thickness of the outer casing.

19. The gas turbine engine of claim 16, wherein the relief groove extends along an entire perimeter of the strut..

20. The gas turbine engine of claim 16, wherein the exhaust frame comprises a plurality of struts extending radially from the inner casing to the outer casing, and a plurality of relief grooves defined in the inner casing or the outer casing, and wherein each relief groove is positioned about a perimeter of one of the struts.
